(19) Europäisches Patentamt
European Patent Office
Office européen des brevets

(11) **EP 1 314 129 B1**

(12) **EUROPEAN PATENT SPECIFICATION**

(45) Date of publication and mention
of the grant of the patent:
**30.05.2007 Bulletin 2007/22**

(51) Int Cl.:
***G06K 9/00*** (2006.01)

(86) International application number:
**PCT/US2001/026927**

(21) Application number: **01968239.2**

(22) Date of filing: **30.08.2001**

(87) International publication number:
**WO 2002/019248 (07.03.2002 Gazette 2002/10)**

(54) **CHARACTER RECOGNITION SYSTEM**

ZEICHENERKENNUNGSSYSTEM

SYSTEME DE RECONNAISSANCE DE CARACTERES

(84) Designated Contracting States:
**BE DE FR GB**

(30) Priority: **31.08.2000 JP 2000262096**

(43) Date of publication of application:
**28.05.2003 Bulletin 2003/22**

(73) Proprietor: **Hewlett-Packard Company**
**Fort Collins, CO 80527-2400 (US)**

(72) Inventor: **NAKAGAWA, Shinya**
**Mitaka-shi**
**Tokyo 181-0012 (JP)**

(74) Representative: **Hackett, Sean James**
**Marks & Clerk,**
**Patent Attorneys,**
**Alpha Tower,**
**Suffolk Street Queensway**
**Birmingham B1 1TT (GB)**

(56) References cited:
| | |
|---|---|
| **EP-A- 0 672 995** | **EP-A- 0 790 574** |
| **WO-A-98/19268** | **US-A- 4 589 142** |
| **US-A- 5 937 093** | **US-A- 5 943 443** |
| **US-B1- 6 260 051** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

1. Field of the Invention

The present invention relates to character recognition of a language having many characters, such as Japanese, Chinese, or Korean.

2. Description of the Related Art

In character recognition of a language having many characters, such as Japanese, Chinese, or Korean, there is adopted such a method that features are extracted from an input pattern to extract a feature vector, distances between the feature vector and reference vectors previously extracted for all target characters to be recognized are calculated, and a character corresponding to a reference vector having a smallest distance value is selected as a recognized character.

Japanese Patent Unexamined Publication No. Hei. 2-186490 discloses a system for performing character recognition by calculating distances between a vector extracted from a pattern of an input character and reference vectors extracted from patterns of previously stored target characters. In this system, the Euclidean distance between the vector of the input pattern and the reference vector is calculated and is compared with a predetermined threshold to perform character recognition.

Japanese Patent Unexamined Publication No. Hei. 4-286087 discloses a system for performing character recognition by extracting a feature vector from an input character pattern and calculating the Euclidean distance from a reference vector stored in a feature dictionary, in which the feature dictionary is divided into clusters for respective similar character categories, a distance between the feature vector of the input pattern and a reference vector representing each cluster is calculated, and detailed recognition processing is performed as to reference vectors of similar characters belonging to a cluster having a smallest distance.

In general, in a language having many characters, such as Japanese, Chinese, or Korean, a very large number of features, for example, several hundreds or several thousands features, are used to improve recognition accuracy. In a character recognition system based on a distance from a reference vector corresponding to each candidate character, in general, it takes a calculation time in proportion to the number of candidate characters and the number of features, so that a drop in recognition speed becomes a problem. Specifically, as a distance, there is the Euclidean distance, the weighted Euclidean distance, the city block distance, or the like,

Euclidean distance

$$\sum_{i=1}^{m}(x_i - r_i)^2$$

weighted Euclidean distance

$$\sum_{i=1}^{m} w_i(x_i - r_i)^2$$

city block distance

$$\sum_{i=1}^{m}|x_i - r_i|$$

Where,

$$X = (x1,…, xm)$$

: feature vector of input pattern

$$Rj = (Rj1,…, rjm)$$

: reference vector of j-th candidate character

$$W = (w1, …, wm)$$

: weight vector of feature
m　　: the number of features
n　　: the number of target characters

In any case, it takes calculation of the distance element $(Xi-ri)^2$, $|xi-ri|$ with respect to the respective features n x m times, that is, (the number of candidate characters) x (the number of features) times.

In the foregoing Japanese Patent Unexamined Publication No. Hei. 4-286087, a calculation of the Euclidean distance is restricted to the similar character cluster, so that the processing speed is improved. However, predictions are that it is difficult to properly determine a representative vector as a standard of selection of the similar character cluster, and predictions are that recognition accuracy is lowered according to the quality of the representative vector.

US 4,859,142 discloses a method for recognising unknown characters based in part on the frequency of occurrence of the characters.

US 5,937,093 discloses a pattern recognition method, in which a nearest neighbour is detected using a list based on the individual dispersion values for the quantities of features.

SUMMARY OF THE INVENTION

An object of the present invention is to improve the speed of character recognition without lowering recognition accuracy even in a case where the number of features to be used is large in a language in which the number of candidate characters is large.

According to the present invention there is provided a character recognition system as defined in claim 1 and a character recognition method as defined in claim 12.

According to an embodiment, there is provided a character recognition system having the following structure. That is, in the character recognition system in which character recognition is performed by comparing distances between a feature vector extracted from an input pattern and reference vectors of previously stored target characters, all characters are classified into plurality of classes based on occurrence frequencies of the target characters, there are provided a dictionary storage device for storing the reference vectors for each of the classes and a computer, and the computer is programmed to calculate distances between the feature vector and the reference vectors of plurality of characters belonging to a class having a highest character occurrence frequency among the plurality of classes, and to select, when there is a distance smaller than a class threshold determined for the class, a character of a reference vector corresponding to the distance as a character candidate. As the distance from the reference vector, although the Euclidean distance, the weighted Euclidean distance, the city block distance or the like is used, the term "distance" is generally used here.

The occurrence frequencies of the target characters are calculated as statistical information from a set of a large number of documents in text format (this is referred to as a text corpus), such as past news articles, and the present inventors obtained the occurrence frequencies from the text corpus composed of about twenty million characters for each language and use them. According to this invention, all characters are classified into the plurality of classes based on the occurrence frequencies of the target characters, the reference vectors are stored in the dictionary for each of the classes, distance calculation is made between the feature vector extracted from the input character pattern and the reference vectors of the plurality of characters belonging to the class having the highest character occurrence frequency among the plurality of classes, and when a distance value satisfy within a certain threshold, the character is selected as the character candidate. According to the statistics obtained by the inventor, for example, in the case of Japanese, 382 characters belonging to the highest class in the occurrence frequency occupy about 80% of the text corpus. Accordingly, it is expected that also in a document, characters of about 80% are contained in the 382 characters of the highest frequency class. The present invention uses the bias of the statistical character occurrence frequency like this. First, only a character set belonging to the highest class in the occurrence frequency is targeted to recognize, and in the case where an excellent recognition result is obtained, recognition processing for remaining low occurrence frequency character sets are omitted, so that the speed of the character recognition processing is improved. Actually, programming is made so that the target character set is divided into plurality of target character sets, recognition processing is performed in the order of high frequency, and recognition processing for a set having a frequency lower than a set in which an excellent result has been obtained is omitted.

According to another embodiment, when there is no distance smaller than the class threshold, distances between the feature vector and the reference vectors of plurality of characters belonging to a class having a second highest character occurrence frequency are calculated, and when there is a distance smaller than a second class threshold determined for the class, a character of a reference vector corresponding to the distance is selected as a character candidate.

According to a still another embodiment, for the purpose of improving the speed also in the distance calculation as to one of the reference vectors, a process of calculating a distance value by accumulating distance elements as to all the features is made a calculation of an accumulated distance value using accumulation of n feature elements, (1) the accumulated distance value is compared with a character candidate selection threshold, (2) if it is not larger than the threshold, distance elements of next n feature elements are accumulatively calculated, the procedures of (1) and (2) are repeated, and when the accumulated distance value exceeds the character candidate selection threshold, it is judged that the reference vector is out of candidate, and a comparison with a next reference vector is started so that a processing time is shortened. Further, according to the present invention, by changing the order of accumulated distance elements, omission of a distance calculation process based on the accumulated distance value is effectively performed. Specifically, all training patterns of all target characters are used, a distribution of distance elements with respect to the respective features is obtained, and accumulation of the distance elements is performed in the descending order of its average value. As sorting of distance elements like this, there is a method of performing a common sort of reference vectors of all target characters, a method of performing a sort for each of the reference vectors in the descending order of distribution average of the distance elements, or the like.

The feature vector is extracted from a training pattern of all target characters, and the reference vector is prepared as a vector of, for example, with respect to Japanese, several hundreds dimensions. When a distribution of the distance elements for each dimension (that is, each feature) with respect to all the characters is observed, that the average of the distance elements is large means that the feature of the dimension contributes so as to increase the distance value of all. In the case of a correct character, since it is expected that the distance value becomes small, it can be said that the feature of the dimension like this is an effective feature for judging that a character is out of a candidate at an early stage.

Accordingly, an average of distance elements for each dimension with respect to all the characters constituting the reference vectors is extracted from the training data in advance, and vectors in which the feature values of the respective reference vectors are sorted in the descending order of the average value are prepared. Also with respect to the feature vector extracted from the input pattern, a vector sorted in this order is prepared, and in the distance calculation of one reference vector and the feature vector, accumulation of distance elements is performed in this order. For example, first, an accumulated distance value in which distance elements up to 50 dimensions are accumulated is calculated, and if this reaches a threshold, it is judged that this reference vector is a character out of a candidate, and a comparison with a next reference vector is started. By doing so, since the recognition processing can be made to proceed without calculating distance elements of all of several hundreds dimensions, a time of the recognition processing can be shortened.

Further, according to a still another embodiment, the computer is programmed to dynamically set a distance value of a character candidate having an mth (m is the number of character candidates to be selected) smallest distance value as a character candidate selection threshold.

Further, according to a still another embodiment, a similar character dictionary for providing characters having similar characteristics to arbitrary characters is included, and the computer is programmed to take out a character similar to each of the character candidates from the similar character dictionary in response to selection of the plurality of character candidates, to calculate distances between the feature vector to be recognized and reference vectors of the similar characters, to sort distance values of the plurality of character candidates and distance values of the similar characters, and to select a predetermined number of characters in ascending order of distance as recognition character candidates. By this, also in the case where a correct character exists in a low frequency character candidate class which has been omitted, it becomes possible to make it contained in candidates as a similar character, and a drop in recognition accuracy can be suppressed.

BRIEF DESCRIPTION OF THE DRAWINGS

FIG. 1 is a functional block diagram showing the whole structure of a character recognition system of an embodiment of the present invention.
FIG. 2 is a block diagram for explaining a concept of a dictionary used in an embodiment of the present invention.
FIG. 3 is a flowchart showing a process for selecting a character candidate from reference vectors for class 1.
FIG. 4 is a flowchart showing a process for selecting a character candidate from reference vectors for class 2.
FIG. 5 is a flowchart showing a process for selecting a character candidate from reference vectors for class 3.
FIG. 6 is a flowchart showing a process of similar character processing.

DETAILED DESCRIPTION OF THE PREFERRED EMBODIMENTS

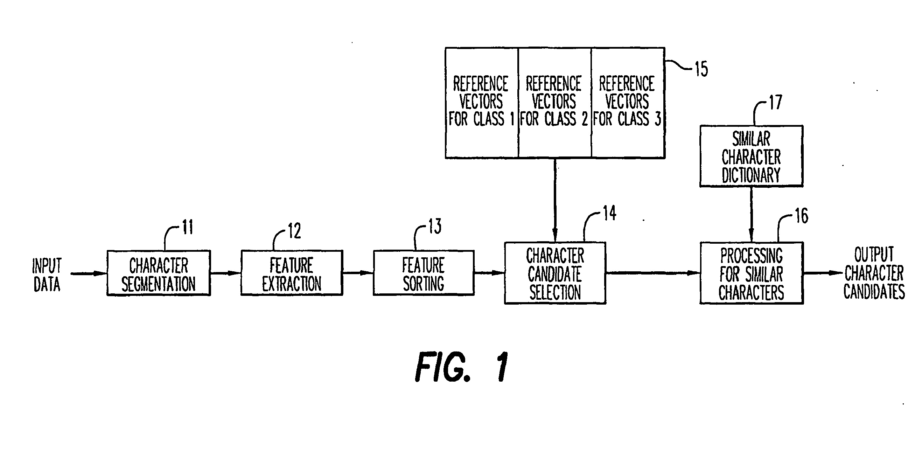

Embodiments of the present invention will next be described with reference to the drawings. FIG. 1 is a functional block diagram showing the whole structure of an example of a Japanese character recognition system using the present invention. This system is realized by a program running on a general-purpose personal computer or a work station. In general, this sort of program is called an OCR (Optical Character Recognition) program. A typical input pattern to the system is image data obtained by scanning a document by an optical scanner.

When the input pattern is received, a character segmentation portion 11 of the OCR program segments characters out of data in bit map format. The character segmentation itself is a function incorporated in a conventional OCR program. The image data segmented in an unit of a character is sent to a feature extraction portion 12, and an inclination, width, curvature, area, and other features of a character line are extracted. In this embodiment, with respect to Japanese, 200 features are extracted for one character. Accordingly, the input pattern is expressed by a vector of 200 dimensions as in the following expression, and is called a feature vector.

## [Numerical expression 1]

$$x = (x_1, x_2, \cdots, x_{200})$$

The feature vector extracted in this way is sent to a feature sorting portion 13, sorting of features is performed in accordance with a list of elements based on average distance described later to generate a new vector, it is sent to a character candidate selection portion 14, and the weighted Euclidean distance as to each of reference vectors of plurality of target characters stored in a reference character dictionary 15 is calculated.

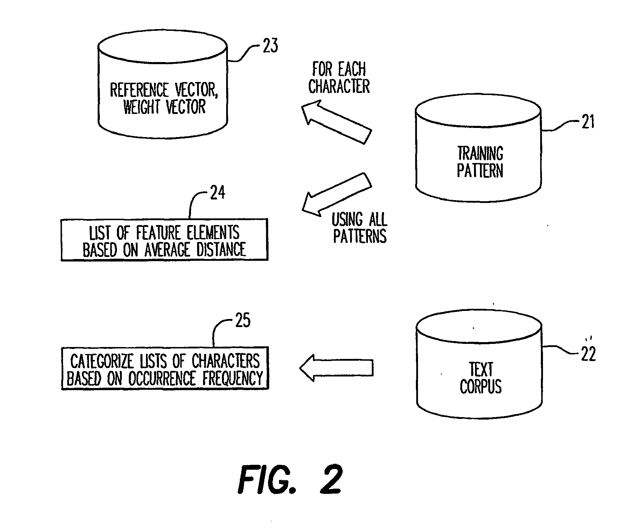

Here, the reference character dictionary 15 will be described with reference to FIG. 2. A reference vector as to a certain character is obtained by extracting feature vectors as to an image pattern of various type faces and sizes of the character and averaging them. At this time, a variance for each feature value is calculated, and is used for weighted Euclidean distance calculation in which its inverse is made a weight coefficient.

This method itself is conventionally used. Reference vectors and weight vectors as to all target characters are stored in a dictionary 23. An average of distance elements is calculated for each of feature elements by using all training patterns over all of the thus stored reference vectors of the dictionary 23, and a list 24 of feature elements based on average distance in which dimensions of features are sorted in the descending order of the average is prepared. The respective feature elements of the respective reference vectors and weight vectors stored in the dictionary 23 are sorted in accordance with the list in the descending order of the distance element average. When the distance element average is large, it is expected that the distance element value in the feature element in the candidate character becomes large. Thus, in distance calculation explained later, the distance calculation is executed in the descending order of the distance element average. To this end, as to the feature vector extracted from the input pattern, the feature elements are sorted in accordance with the list of feature elements based on average distance in the feature sorting portion 13.

A text corpus of FIG. 2 is a set of documents generally used in a society and formed into text format, and is, for example, documents stored from information source such as online news. An occurrence frequency of each of characters is calculated from the set of the documents, and the characters are classified into three classes in accordance with the occurrence frequency. According to observation by the inventor, Chinese, Japanese, and Korean are classified using text corpora composed of about twenty million characters as shown in the following table.

[Table 1]

| | Class 1 | | Class 2 | | Class 3 | |
|---|---|---|---|---|---|---|
| | number of characters | cover ratio | number of characters/ number of accumulated characters | accumulated cover ratio | number of characters/ number of accumulated characters | accumulated cover ratio |
| Chinese (simplified characters) | 450 | 74.95% | 1313/1764 | 97.00% | 2197/3961 | 99.89% |

(continued)

| | Class 1 | | Class 2 | | Class 3 | |
|---|---|---|---|---|---|---|
| | number of characters | cover ratio | number of characters/ number of accumulated characters | accumulated cover ratio | number of characters/ number of accumulated characters | accumulated cover ratio |
| Chinese (Traditional characters) | 407 | 75.00% | 1344/1751 | 97.00% | 2206/3957 | 99.80% |
| Japanese | 382 | 80.01% | 1126/1508 | 99.00% | 1459/2967 | 99.96% |
| Korean | 282 | 90.75% | 940/1222 | 99.98% | 1410/2632 | 99.95% |

That is, with respect to Japanese, 382 characters of the highest occurrence frequency classified into class 1 occupy 80.01% of the text corpus, and when 1126 characters for class 2 of the next highest occurrence frequency are added to these, they occupy 99.00% of the text corpus. Further, 1459 characters of the low occurrence frequency classified into class 3 are added to these, they can cover 99.96% of the text corpus. This means that when a character recognition system of Japanese having about 6000 characters up to the JIS second level is structured, even if 2967 characters among those are targeted, the ratio of characters out of a candidate is only at most 0.04% and actual damage is not serious. Besides, it is understood that also in the 2967 characters, there is a considerable bias in statistical frequency. Similar observations are seen also in Chinese and Korean.

In the embodiment of the present invention, on the basis of the observation like this, the reference vectors contained in the dictionary 15 of the reference vectors are classified into three classes in accordance with Table 1. In distance calculation from the feature vector of the input pattern, first, distances as to the respective reference characters for the class 1 are calculated, and when there is a reference vector having a sufficiently small distance, that is, a sufficiently high approximation, the recognition processing is ended within the distance calculation as to the reference vectors for the class 1, and distance calculation as to the reference vectors for the class 2 and the class 3 is not performed. In this case, the distance calculation is ended within the distance calculation as to the 382 reference vectors, and the distance calculation as to the 1126 reference vectors for the class 2 and the 1459 reference vectors for the class 3 are omitted, so that a time of the distance calculation executed for the feature vector can be greatly shortened.

As a result of the distance calculation of the feature vector of the input pattern and the 382 reference vectors for the class 1, when there is no reference vector having a sufficiently small distance value, the distance calculation as to the 1508 reference vectors for the class 2 is executed, and when there is a reference vector having a sufficiently small distance value, calculation is ended within the distance calculation as to the reference vectors for the class 2, and the distance calculation as to the reference vectors for the class 3 is not performed. By this, a time of the distance calculation can be shortened.

Since the characters up to the class 2 occupy 99% of the text corpus, it is expected that there are characters of 1% in a given text in which a suitable character candidate can not be found by the distance calculation as to the reference vectors for the class 1 and the class 2. With respect to the feature vector of the input pattern of about 1%, distance calculation as to the reference vectors for the class 3 is started via the distance calculation as to the reference vectors for the class 1 and the class 2. In this way, among the reference vectors for the class 3, one having a small distance is selected as a character candidate.

When a character candidate is selected by the character candidate selection portion 14 in this way, the process proceeds to a processing portion 16 for similar characters. The processing portion 16 for the similar characters refers to a similar character dictionary 17 to improve accuracy of character recognition. In the similar character dictionary, a list of characters which are apt to be confused in character recognition is prepared for each of the characters. When the processing portion 16 for the similar characters receives one or plurality of character candidates from the character candidate selection portion 14, it refers to the similar character dictionary for each of the character candidates to read out similar characters, and reads out reference vectors of the similar characters from the reference vector dictionary 15.

The distance calculation of the feature vector extracted from the input pattern and the reference vectors of the plurality of similar characters is executed, and a predetermined number of characters are outputted as final character candidates in the ascending order of distance among the set containing the character candidates and the similar characters. Here, the term "final" means that a character recognition stage by the distance calculation is ended. In an actual character recognition program, thereafter, a process generally referred to as a post processing is executed. The post processing is a processing for determining priority order of the character candidates on the basis of analysis of a context, analysis of adjacency relation, occurrence probability of adjacent characters, and the like. Since the post processing itself is a conventionally used technique, the detailed description is omitted.

Class 1 character candidate selection process

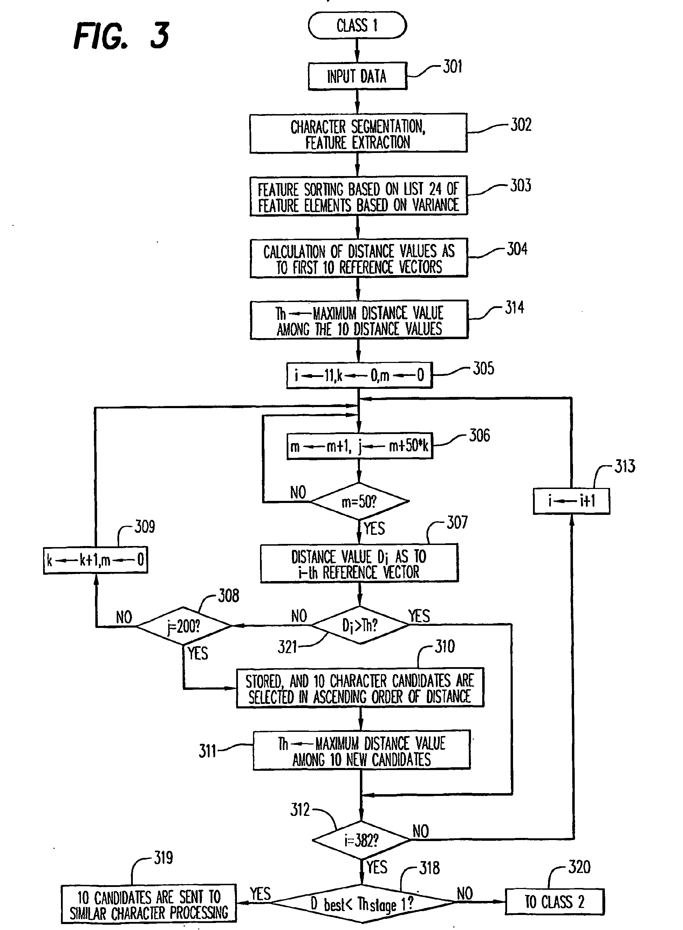

Next, a flow of a process of the character recognition system of the embodiment of the present invention will be described with reference to FIG. 3. This is a process for selecting 10 candidate characters from a candidate character set for the class 1. When an input pattern obtained by scanning a document through a scanner is transferred to the character recognition program of the embodiment of the present invention (301), respective character regions are segmented out of the image data in the character segmentation portion 11 (FIG. 1), and feature extraction as described above is performed in the feature extraction portion 12 (FIG. 1) with respect to the respective character regions (302). The feature vector extracted in this way is sent to the feature sorting portion 13, and features are sorted in the list of feature elements based on average distance explained in connection with FIG. 2 (303). Next, 10 distance values over all dimensions are calculated for the respective first ten reference vectors (304), and a threshold Th is set to the highest distance value among the 10 distance values calculated in this way (314). As the distance value, the weighted Euclidean distance is used, and is calculated as j = 1 to 200 in expression 2 shown below. Then, the number i of a reference vector for class 1 read out from the reference vector dictionary 15 is set to 11, initial values of variables are set to k = 0 and m = 0 (305), the dimension j of the feature vector and the reference vector contained in the distance calculation is made j = m + 50 × k, and m is changed from 1 to 50 (306). In this way, a distance $D_i$ between the reference vector and the feature vector over the dimensions 1 to 50 is calculated from the following expression (307).

[Numerical expression 2]

$$D_i = \Sigma w_j (x_j - r_j)^2$$

$$(j = 1 \text{ to } 50)$$

Here, $W_j$ is each element of a weight vector in each of the reference vectors explained in connection with the reference vector dictionary 23 of FIG. 2. The term $x_j$ expresses each element of the feature vector extracted from the input pattern, and $r_j$ expresses each element of the reference vector. A value of the square root of a value obtained by the expression 2 is a distance value called the weighted Euclidean distance. Here, for simplification, a value before the square root is taken is used as a standard of the weighted Euclidean distance and is called a distance. When the distance $D_i$ as to a reference vector exceeds the threshold Th (321), it is judged that this reference vector is disqualified as a character candidate to this feature vector. At this time, it is judged at step 312 whether or not comparison of the distance has been ended for all 382 reference vectors for the class 1, and if it is not ended, i is incremented and calculation of the distance $D_i$ as to a next reference vector is performed (307). When the distance $D_i$ as to the reference vector is the threshold (Th) or less (321), it is checked whether or not the dimension j reaches 200 (308), and if it does not reach 200, k is incremented (309), and a distance for the dimensions j of next 51 to 100 is calculated. In this way, the distance is calculated for j = 51 to 100 and is added to the distance previously calculated for j = 1 to 50, and the distance $D_i$ for j = 1 to 100 is calculated (307).

As a result, when $D_i$ exceeds Th, i is incremented through step 312, and the process proceeds to a comparison with a next reference vector. If $D_i$ is Th or less, k is further incremented through step 309, and the distance $D_i$, that is, the distance $D_i$ for j = 100 to 150 is calculated (307). This processing is repeated and when j reaches 200 while $D_i$ is in the state of Th or less, that is, if the distance $D_i$ including all dimensions is the threshold or less, a character corresponding to the reference vector at that time is stored in the memory as a character candidate which becomes a candidate of output of the system (310). In this memory, the character codes and distance values of the 10 reference vectors referred at the first of the process are stored. The new character candidate is input to this memory, and a character having the largest distance value among the previously stored character codes is deleted from the memory. In this way, in the memory, the 10 character candidates are stored in the ascending order of distance. Then, among the distance values of the 10 character candidates, the largest value is set as a new threshold Th (311). As a result of comparison with subsequent reference vectors, when a new character candidate is transferred to the memory, among the 10 character candidates previously stored in the memory, a character candidate having the largest distance value is deleted from the memory, and the new character candidate is added to the memory. Then, the largest distance value among the new 10 character candidates is set as a threshold Th.

Like this, after the number of the character candidates reaches 10, a threshold used for judgement at the block 307 is dynamically changed. In the block 312, when i = 382 is satisfied, that is, when distance calculation as to all reference vectors for the class 1 is ended, it is judged whether or not the smallest distance value $D_{best}$ among the 10 character candidates stored in the memory is smaller than a class threshold $Th_{stage1}$ previously set for the character candidate selection of the class 1 (318) . In this embodiment, $Th_{stage1}$ is set to, for example, 120,000. That a character candidate satisfying this condition exists means that a character candidate having a sufficiently high approximation is obtained in the character candidate selection processing in the class 1. Accordingly, in this case, the 10 character candidates stored in the memory are transferred to the similar character processing portion 16, and the character candidate selection processing (14) as to the feature vector of this input pattern is ended.

Class 2 character candidate selection process

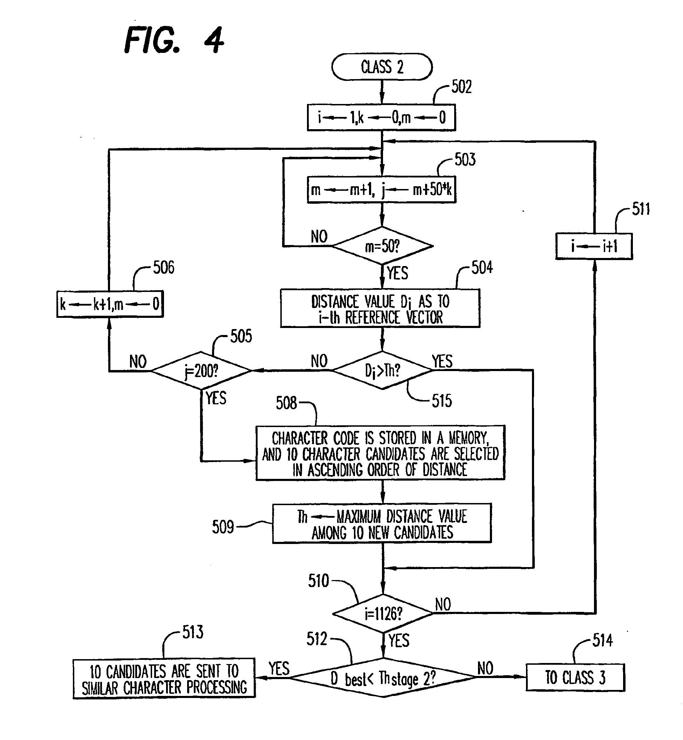

When the condition of the block 318 is not satisfied, a process for selecting a character candidate from the reference vectors for the class 2 is started (320). The character candidate selection process of the class 2 will be described with reference to FIG. 4. Now, since the character recognition of Japanese is performed, reference vectors and weight vectors for 1126 target characters are stored as the reference vectors for the class 2 in the reference vector dictionary 15. When the character candidate selection process of the class 2 is started, initial setting is carried out to make i = 1, k = 0, and m = 0 (502), the dimension j of the feature vector and the reference vector of distance calculation is made j = m + 50 × k, m is changed from 1 to 50 (503), and calculation of distance value $D_i$ between the i-th reference vector and the feature vector extracted from the input pattern is executed (504) . When the distance value $D_i$ is larger than the threshold Th (515), and i does not reach i = 1126 (510), i is incremented (511), and the process proceeds to a calculation of a distance value as to a next reference vector.

When the distance value $D_i$ is the threshold Th or less, k is incremented, a distance value is calculated for next 50 dimensions, that is, j = 51 to 100, and the value is added to the distance value previously calculated for j = 1 to 50 to calculate the distance value $D_i$ for j = 1 to 100 (504). When the distance value $D_i$ exceeds Th and i does not reach i = 1126 (510), i is incremented and the process proceeds to distance calculation as to a next reference vector (511) . When $D_i$ does not exceed Th, k is incremented, j is incremented to next 50 dimensions, and the distance value $D_i$ for j = 1 to 150 is calculated by the same process as the above (504). When this process is repeated and j reaches j = 200 while $D_i$ is in the state where it does not exceed Th (505), a character code corresponding to this reference vector is input to the memory (508). In the memory, the character candidates selected in the previous class 1 character candidate selection process are stored. If the number of the character candidates reaches 10, a character candidate having the largest distance value is deleted from the memory, and the new character candidate is added, so that the number of the character candidates is kept 10. Then, the largest distance value among the distance values of the 10 character candidates is made a new threshold Th (509) .

Thereafter, when the reference vector passes through the test of the block 515 and is input to the memory (508), replacement of the character candidate similar to the above is performed, and the threshold Th is dynamically changed. When i = 1126 is satisfied in the block 510, that is, when the character candidate selection process is executed for all 1126 reference vectors for the class 2, it is judged whether or not the smallest distance value of the 10 character candidates stored in the memory is smaller than a class threshold $Th_{stage2}$ of the class 2 (512), and if it is smaller, the character candidate selection process (14) is ended, and the 10 character candidates are transferred to the similar character processing portion 16 (FIG. 1) . In this embodiment, $Th_{stage2}$ is set to, for example, 150, 000 larger than $Th_{stage1}$. That is, the class threshold of the class 2 is made looser than the threshold of the class 1. When the condition of the block 512 is not satisfied, the process proceeds to a character candidate selection process as to the reference vectors for the class 3.

Class 3 character candidate selection process

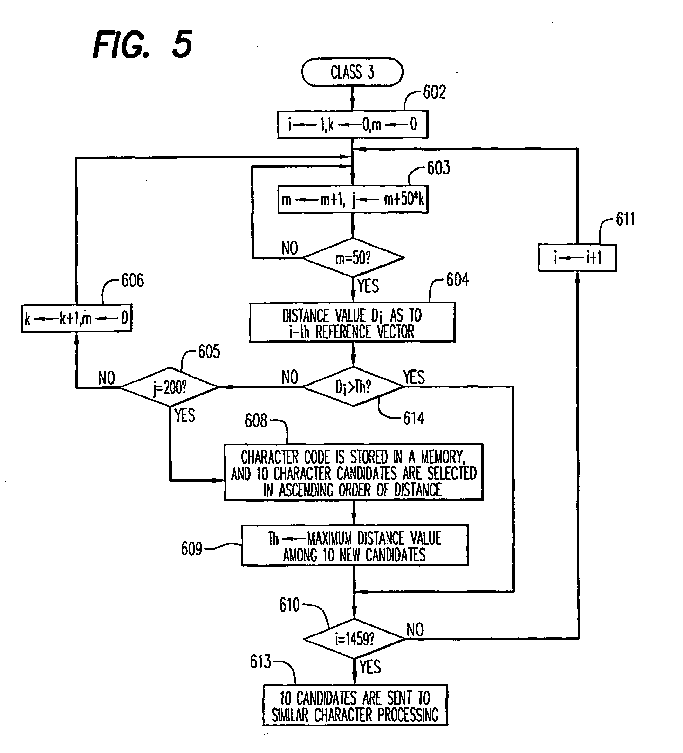

FIG. 5 is a character candidate selection process as to 1459 reference vectors for the class 3. Blocks 602 to 610 are the same as the blocks 502 to 510 of FIG. 4 except that judgement of the block 610 is the numeral 1459 of the reference vectors for the class 3. Accordingly, explanation of functions of these blocks is omitted. When i = 1459 is satisfied at the block 610 and the character candidate selection process is ended for all 1459 reference vectors for the class 3, the character candidate selection process is ended, and the 10 character candidates stored in the memory are transferred to the similar character processing portion 16. At this time, when the number of character candidates stored in the memory is less than 10, all the character candidates are transferred to the similar character processing portion 16.

Similar character processing

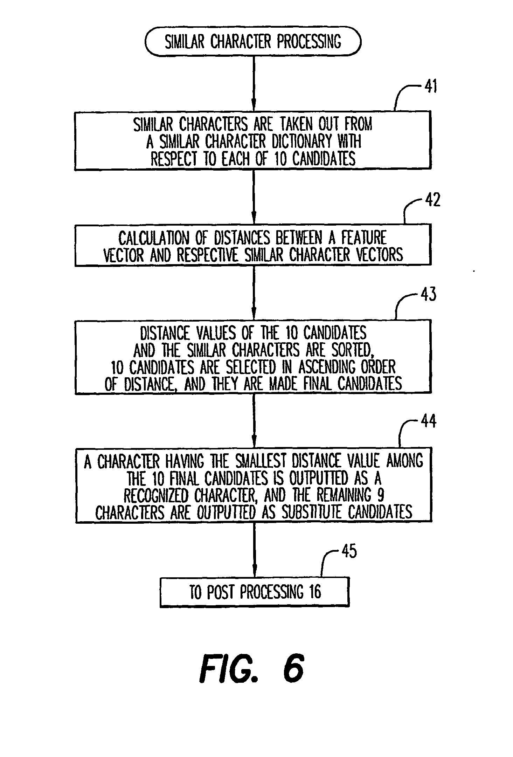

Next, a process of similar character processing will be described with reference to FIG. 6. When the similar character processing portion 16 of FIG. 1 receives the 10 character candidates from the character candidate selection portion 14, it refers to the similar character dictionary for each of the character candidates, and reads out similar characters (41). Reference vectors and weight vectors of the similar characters are read out from the reference vector dictionary 15, and a distance value from the feature vector extracted from the input pattern is calculated (42) . After weighted Euclidean distances are calculated for all the readout similar characters, the distance values of the 10 character candidates and these similar characters are sorted, and 10 characters are selected in the ascending order of the distance value (43).

Among the'10 final candidates obtained in this way, one having the smallest distance value is outputted as a recognized character, and the remaining 9 candidates are outputted as substitute candidates. Here, although selection of the character candidate is performed on the basis of only the comparison with the reference vectors as to target characters, at the halfway stage of the character candidate selection, or at the stage of the completion of the character candidate selection, it is preferable to change the priority of character candidates on the basis of grammatical analysis of a text, adjacency relation of words, dependency relation between characters, and the like, that is, to execute the so-called post processing.

As the output of the OCR program, a text as a set of characters of highest priority obtained in this way is presented to the user. The user can find a recognition error in the OCR output from a context of the text. In this case, when the user clicks the error character, nine substitute characters are displayed in a pull-down form, and when the user clicks one of them, the character is substituted for the error character.

Although the present invention has been described on the specific embodiment, the present invention is not limited to the embodiment like this.

**Claims**

1. A character recognition system for performing character recognition by comparing distances between a feature vector extracted from an input pattern and previously stored reference vectors of target characters determined from training patterns of the target characters, wherein all characters are classified into a plurality of classes based on occurrence frequencies of the target characters, the system comprising:

   a computer;
   a dictionary storage device (15) for storing the reference vectors for each of the classes; and
   a list (24) indicating an order of calculated average distances between feature elements of all of said reference vectors and corresponding feature elements of feature vectors extracted from all the training patterns of all of the target characters,

   wherein the system is configured to sort the features of the feature vector extracted from the input pattern in accordance with the list in descending order of average distance; and
   the computer is programmed to calculate distances between the feature vector and the reference vectors of a plurality of target characters belonging to the class having the highest character occurrence frequency among the plurality of classes, wherein:

      i) a character candidate selection threshold $T_h$ is calculated; and
      ii) a comparison is performed wherein

         a) with respect to features up to an n-th feature a cumulative distance between the features of the feature vector and the corresponding features of the reference vectors is calculated
         b) the distance is compared with $T_h$; and
         c) if the distance is not larger than $T_h$, a) and b) are repeated for the next n features, but if the distance is larger than $T_h$ the comparison for the current reference vector is stopped and a comparison with a next reference vector is started;

   and,
   the computer is programmed to select a character of a reference vector as a character candidate when there is a distance between the feature vector and the reference vector that is smaller than a predetermined class threshold for the class.

2. The system according to claim 1, wherein the computer is programmed to calculate distances between the feature vector and the reference vectors of plurality of target characters belonging to the class having the second highest character occurrence frequency when there is no distance smaller than the class threshold, and to select, when there is a distance smaller than a second class threshold determined for the class, a character of a reference vector corresponding to the distance as a candidate character.

3. The system according to claim 2, wherein the computer is programmed such that when there is no distance smaller than the class threshold for the class having the second highest character occurrence frequency, distances between the feature vector and the reference vectors of a plurality of characters belonging to the class having the third highest character occurrence frequency are calculated, and when there is a distance smaller than a class threshold determined for the class, a character of a reference vector corresponding to the distance is selected as a character candidate.

4. The system according to claim 1, wherein the computer is programmed to store a character corresponding to a reference vector used as a comparison object, as a character candidate in a memory, when a distance value based on all the features of the feature vector does not exceed the character candidate selection threshold.

5. The system according to claim 4, wherein the computer is programmed to dynamically set a distance value of a character candidate having an m-th smallest distance value as a character candidate selection threshold, m being the number of character candidates to be selected.

6. The system according to claim 5, wherein the computer is programmed such that when the distance calculations between the feature vector and the reference vectors belonging to the class having the highest character occurrence frequency is completed, and when one or more of these distances are smaller than the predetermined class threshold, m characters corresponding to the reference vectors having distances of from the smallest distance to the m-th smallest distance are selected as character candidates.

7. The system according to any preceding claim, further comprising a similar character dictionary (17) for providing characters having similar relations to arbitrary characters, wherein the computer is programmed to take out characters similar to the respective character candidates from the similar character dictionary (17) in response to selection of the plurality of character candidates, to calculate distances between the feature vector to be recognized and reference vectors of the similar characters, to sort distance values of the plurality of character candidates and distance values of the similar characters, and to select a predetermined number of characters in ascending order of distance as recognition character candidates.

8. The system according to claim 1, wherein said dictionary storage device (15) is operable for storing information indicating a descending order of average distance prepared by calculating average distance values of features of the reference vectors of the target characters over substantially all characters and the reference vectors.

9. The system according to claim 8, wherein said computer is programmed to calculate said character candidate selection threshold by calculating a distance between said feature vector of the input character and each of a plurality of said reference vectors, and to set a distance value that is relatively small in comparison to said calculated distance values as said character candidate selection threshold.

10. The system according to claim 9, wherein said comparison is performed such that said nth feature corresponds to a predetermined halfway dimension.

11. The system according to claim 10, wherein when the distance value at the halfway dimension does not exceed the character candidate selection threshold, the computer calculates a distance value up to a second halfway dimension.

12. A character recognition method in which all characters are classified into a plurality of classes based on occurrence frequencies of target characters, a computer is provided with a dictionary storage (15) device for storing reference vectors of the target characters for each of the classes wherein the reference vectors are determined from training patterns of the target characters, and a list (24) indicating an order of calculated average distances between feature elements of all of said reference vectors and corresponding feature elements of feature vectors extracted from all the training patterns of all of the target characters is used, wherein distances between a feature vector extracted from an input pattern and the reference vectors are compared to perform character recognition, the method comprising the steps of:

sorting (303) features of the feature vector extracted from the input pattern in accordance with the list (24) in descending order of average distance;
calculating (304) distances between the feature vector and the reference vectors of plurality of target characters belonging to the class having the highest character occurrence frequency among the plurality of classes, wherein

> i) a character candidate selection threshold $T_h$ is calculated (314); and
> ii) a comparison is performed wherein
>
> > a) with respect to features up to an n-th feature a cumulative distance between the features of the feature vector and the corresponding features of the reference vectors is calculated (307);
> > b) the distance is compared with $T_h$ (321); and
> > c) if the distance is not larger than $T_h$, a) and b) are repeated for the next n features, but if the distance is larger than $T_h$ the comparison for the current reference vector is stopped and a comparison with a next reference vector is started

and
selecting a character of a reference vector as a candidate character when there is a distance between the feature vector and the reference vector that is smaller than a predetermined class threshold for the class (318).

**13.** The method according to claim 12, further comprising the steps of:

calculating, when there is no distance smaller than the class threshold, distances between the feature vector and the reference vectors of a plurality of target characters belonging to the class having the second highest character occurrence frequency; and
selecting, when there is a distance smaller than a second class threshold determined for the class, a character ofa reference vector corresponding to the distance as a candidate character (Fig. 4).

**14.** The method according to claim 13, further comprising the steps of:

calculating distances between the feature vector and reference vectors of plurality of characters belonging to the class having the third highest character occurrence frequency when there is no distance smaller than the class threshold for the class having the second highest character occurrence frequency; and
when there is a distance smaller than a class threshold determined for the class, selecting a character of a reference vector corresponding to the distance as a character candidate (Fig. 5).

**15.** The method according to claim 12 wherein, when a distance is calculated including all the features of the feature vector, which distance does not exceed the character candidate selection threshold, a character corresponding to the reference vector that was used as a comparison object, is stored as a character candidate in a memory.

**16.** The method according to claim 15, further comprising a step of dynamically setting a distance value of a character candidate having an m-th smallest distance value as a character candidate selection threshold, m being the number of character candidates to be selected.

**17.** The method according to claim 16, wherein when distance calculation of the feature vector as to the reference vectors belonging to the class having the highest character occurrence frequency is completed, when one or a plurality of these distances are smaller than a threshold determined for the class, m characters corresponding to the reference vectors having distances ranging from the smallest distance to the m-th smallest distance are selected as character candidates.

**18.** The method according to any one of claims 12 to 17, wherein a similar character dictionary (17) for providing characters having similar relations to arbitrary characters is used and the method further comprises the steps of:

taking out (41) characters similar to the respective character candidates from the similar character dictionary in response to selection of the plurality of character candidates;
calculating distances (42) between the feature vector to be recognized and reference vectors of the similar characters;
sorting distance values (43) of the plurality of character candidates and distance values of the similar characters; and
outputting (44) a predetermined number of characters in ascending order of distance as recognition character candidates.

19. A computer program product comprising software code for performing the method steps according to any one of claims 12 to 18, when said product is run on a computer.

20. The computer program product of claim 19, including data accessible by the computer, the data comprising a dictionary (15) in which all characters are classified into plurality of classes based on occurrence frequencies of target characters, and reference vectors are stored for each of the classes.

21. The computer program product of claim 19 or claim 20, including data accessible by the computer, the data comprising a list (24) indicating an order of average distance of features of a number of reference vectors.

22. The computer program product of any one of claims 18 to 21, including data accessible by the computer, the data comprising a similar character dictionary (17) for providing characters having similar relations to arbitrary characters.

**Patentansprüche**

1. Zeichenerkennungssystem zum Durchführen von Zeichenerkennung mittels Vergleichen von Abständen zwischen einem Merkmalsvektor, der aus einem eingegebenen Muster extrahiert wird, und zuvor gespeicherten Bezugsvektoren von Zielschriftzeichen, die aus Trainingsmustern von Zielschriftzeichen ermittelt wurden, wobei alle Schriftzeichen auf Basis der Auftrittshäufigkeiten der Zielschriftzeichen in eine Mehrzahl von Klassen eingruppiert werden, wobei das System umfasst:

einen Computer;
eine Wörterbuchspeichervorrichtung (15) zum Speichern der Bezugsvektoren für jede der Klassen und
eine Liste (24), die eine Reihenfolge berechneter durchschnittlicher Abstände zwischen Merkmalselementen aller dieser Bezugsvektoren und entsprechenden Merkmalselementen von Merkmalsvektoren angibt, die aus den Trainingsmustern aller Zielschriftzeichen extrahiert wurden,

wobei das System derart konfiguriert ist, dass die Merkmale des Merkmalsvektors, der aus dem eingegebenen Muster extrahiert wird, gemäß der Liste in der Reihenfolge des abnehmenden durchschnittlichen Abstands geordnet werden; und
der Computer derart programmiert ist, dass er Abstände zwischen dem Merkmalsvektor und den Bezugsvektoren einer Mehrzahl an Zielschriftzeichen berechnet, die zu der Klasse mit der höchsten Schriftzeichenauftrittshäufigkeit unter der Mehrzahl an Klassen gehört, wobei:

i) eine Schriftzeichenkandidatenauswahlschwelle $T_h$ berechnet wird und
ii) ein Vergleich durchgeführt wird, wobei

a) in Bezug auf Merkmale bis zu einem n. Merkmal ein kumulativer Abstand zwischen den Merkmalen des Merkmalsvektors und den entsprechenden Merkmalen der Bezugsvektoren berechnet wird;
b) der Abstand mit $T_h$ verglichen wird und,
c) wenn der Abstand nicht größer als $T_h$ ist, a) und b) für die nächsten n Merkmale wiederholt werden, aber wenn der Abstand größer als $T_h$ ist, die Zusammensetzung für den gegenwärtigen Bezugsvektor gestoppt und ein Vergleich mit einem nächsten Bezugsvektor gestartet wird;

und
der Computer derart programmiert ist, dass ein Schriftzeichen eines Bezugsvektors als Schriftzeichenkandidat ausgewählt wird, wenn zwischen dem Merkmalsvektor und dem Bezugsvektor ein Abstand besteht, der kleiner ist als die zuvor ermittelte Klassenschwelle für die Klasse.

2. System nach Anspruch 1, wobei der Computer derart programmiert ist, dass er Abstände zwischen dem Merkmalsvektor und den Bezugsvektoren einer Mehrzahl an Zielschriftzeichen berechnet, die zu der Klasse mit der zweithöchsten Schriftzeichenauftrittshäufigkeit gehört, wenn es keinen kleineren Abstand als die Klassenschwelle gibt, und der, wenn ein Abstand besteht, der kleiner ist als die für die Klasse ermittelte zweite Klassenschwelle, ein Schriftzeichen eines Bezugsvektors, der dem Abstand entspricht, als Kandidatenschriftzeichen auswählt.

3. System nach Anspruch 2, wobei der Computer derart programmiert ist, dass, wenn kein Abstand vorliegt, der kleiner ist als die Klassenschwelle für die Klasse mit der zweithöchsten Schriftzeichenauftrittshäufigkeit, Abstände zwischen dem Merkmalsvektor und den Bezugsvektoren einer Mehrzahl an Schriftzeichen berechnet werden, die zu der Klasse mit der dritthöchsten Schriftzeichenauftrittshäufigkeit gehört, und wenn ein Abstand besteht, der kleiner ist als die für die Klasse ermittelte Klassenschwelle, ein Schriftzeichen eines Bezugsvektors, der dem Abstand entspricht, als Kandidatenschriftzeichen auswählt.

4. System nach Anspruch 1, wobei der Computer derart programmiert ist, dass er ein Schriftzeichen, das einem Bezugsvektor entspricht, der als Vergleichsobjekt verwendet wird, als Schriftzeichenkandidat in einem Speicher speichert, wenn ein Abstandswert auf Basis aller Merkmale des Merkmalsvektors die Schriftzeichenkandidatenauswahlschwelle nicht übersteigt.

5. System nach Anspruch 4, wobei der Computer derart programmiert ist, dass er einen Abstandswert eines Schriftzeichenkandidaten mit einem m.-kleinsten Abstandswert dynamisch als Schriftzeichenkandidatenauswahlschwelle einstellt, wobei m die Anzahl der auszuwählenden Schriftzeichenkandidaten ist.

6. System nach Anspruch 5, wobei der Computer derart programmiert ist, dass, wenn die Abstandsberechnungen zwischen dem Merkmalsvektor und den Bezugsvektoren, die zu der Klasse mit der höchsten Schriftzeichenauftrittshäufigkeit gehören, beendet sind und wenn einer oder mehrere dieser Abstände kleiner als die zuvor ermittelte Klassenschwelle sind, m Schriftzeichen entsprechend den Bezugsvektoren mit Abständen von dem kleinsten Abstand bis zu dem m.-kleinsten Abstand als Kandidatenschriftzeichen ausgewählt werden.

7. System nach einem vorhergehenden Anspruch, das ferner ein Wörterbuch ähnlicher Schriftzeichen (17) zum Bereitstellen von Schriftzeichen mit ähnlichen Beziehungen zu willkürlichen Schriftzeichen umfasst, wobei der Computer derart programmiert ist, dass er Schriftzeichen, die ähnlich zu den jeweiligen Schriftzeichenkandidaten sind, als Reaktion auf die Auswahl der Mehrzahl an Schriftzeichenkandidaten aus dem Wörterbuch ähnlicher Schriftzeichen (17) heraussucht, Abstände zwischen dem zu erkennenden Merkmalsvektor und Bezugsvektoren der ähnlichen Schriftzeichen berechnet, Abstandswerte der Mehrzahl an Schriftzeichenkandidaten und Abstandswerte der ähnlichen Schriftzeichen ordnet und eine zuvor festgelegte Anzahl an Schriftzeichen in der Reihenfolge des abnehmenden Abstands als Erkennungsschriftzeichenkandidaten auswählt.

8. System nach Anspruch 1, wobei die Wörterbuchspeichervorrichtung (15) derart betrieben werden kann, dass sie Information speichert, die eine abnehmende Reihenfolge des durchschnittlichen Abstands angibt, die durch Berechnen der durchschnittlichen Abstandswerte von Merkmalen der Bezugsvektoren der Zielschriftzeichen über im Wesentlichen alle Schriftzeichen und die Bezugsvektoren hergestellt wurde.

9. System nach Anspruch 8, wobei der Computer derart programmiert ist, dass er die Schriftzeichenkandidatenauswahlschwelle durch Berechnen eines Abstands zwischen dem Merkmalsvektor des eingegebenen Schriftzeichens und jedem von einer Mehrzahl der Bezugsvektoren berechnet und einen Abstandswert, der verglichen mit den berechneten Abstandswerten relativ klein ist, als Schriftzeichenkandidatenauswahlschwelle einstellt.

10. System nach Anspruch 9, wobei der Vergleich derart erfolgt, dass das n. Merkmal einer zuvor festgelegten halben Abmessung entspricht.

11. System nach Anspruch 10, wobei, wenn der Abstandswert an der halben Abmessung die Schriftzeichenkandidatenauswahlschwelle nicht übersteigt, der Computer einen Abstandswert bis zu einer zweiten halben Abmessung berechnet.

12. Zeichenerkennungsverfahren, bei dem alle Schriftzeichen auf Basis der Auftrittshäufigkeiten von Zielschriftzeichen in eine Mehrzahl an Klassen eingruppiert werden, ein Computer mit einer Wörterbuchspeichervorrichtung (15) zum Speichern der Bezugsvektoren der Zielschriftzeichen für jede der Klassen ausgestattet ist, wobei die Bezugsvektoren aus Trainingsmustern der Zielschriftzeichen ermittelt werden, und eine Liste (24) verwendet wird, die eine Reihenfolge berechneter durchschnittlicher Abstände zwischen Merkmalselementen aller dieser Bezugsvektoren und entsprechenden Merkmalselementen von Merkmalsvektoren angibt, die aus allen Trainingsmustern aller Zielschriftzeichen extrahiert wurden, wobei Abstände zwischen einem Merkmalsvektor, der aus einem eingegebenen Muster extrahiert wurde, und den Bezugsvektoren zur Durchführung der Zeichenerkennung verglichen werden, wobei das Verfahren die folgenden Schritte umfasst:

Ordnen (303) der Merkmale des Merkmalsvektors, der aus dem eingegebenen Muster extrahiert wurde, gemäß der Liste (24) in der Reihenfolge des abnehmenden durchschnittlichen Abstands;

Berechnen (304) von Abständen zwischen dem Merkmalsvektor und den Bezugsvektoren einer Mehrzahl an Zielschriftzeichen berechnet, die zu der Klasse mit der höchsten Schriftzeichenauftrittshäufigkeit unter der Mehrzahl an Klassen gehört, wobei:

i) eine Schriftzeichenkandidatenauswahlschwelle $T_h$ berechnet wird (314) und
ii) ein Vergleich durchgeführt wird, wobei

a) in Bezug auf Merkmale bis zu einem n. Merkmal ein kumulativer Abstand zwischen den Merkmalen des Merkmalsvektors und den entsprechenden Merkmalen der Bezugsvektoren berechnet wird (307);
b) der Abstand mit $T_h$ verglichen wird (321) und,
c) wenn der Abstand nicht größer als $T_h$ ist, a) und b) für die nächsten n Merkmale wiederholt werden, aber wenn der Abstand größer als $T_h$ ist, die Zusammensetzung für den gegenwärtigen Bezugsvektor gestoppt und ein Vergleich mit einem nächsten Bezugsvektor gestartet wird;

und
Auswählen eines Schriftzeichens eines Bezugsvektors als Kandidatenschriftzeichen, wenn zwischen dem Merkmalsvektor und dem Bezugsvektor ein Abstand besteht, der kleiner ist als eine zuvor ermittelte Klassenschwelle für die Klasse (318).

**13.** Verfahren nach Anspruch 12, das ferner die folgenden Schritte umfasst:

Berechnen, wenn es keinen kleineren Abstand als die Klassenschwelle gibt, der Abstände zwischen dem Merkmalsvektor und den Bezugsvektoren einer Mehrzahl an Zielschriftzeichen, die zu der Klasse mit der zweithöchsten Schriftzeichenauftrittshäufigkeit gehört; und
Auswählen, wenn ein Abstand besteht, der kleiner ist als eine für die Klasse ermittelte zweite Klassenschwelle, eines Schriftzeichens eines Bezugsvektors, der dem Abstand entspricht, als Kandidatenschriftzeichen (Fig. 4).

**14.** Verfahren nach Anspruch 13, das ferner die folgenden Schritte umfasst:

Berechnen von Abständen zwischen dem Merkmalsvektor und Bezugsvektoren einer Mehrzahl an Zielschriftzeichen, die zu der Klasse mit der dritthöchsten Schriftzeichenauftrittshäufigkeit gehört, wenn kein Abstand vorliegt, der kleiner ist als die Klassenschwelle für die Klasse mit der zweithöchsten Schriftzeichenauftrittshäufigkeit; und
wenn ein Abstand besteht, der kleiner ist als eine für die Klasse ermittelte Klassenschwelle, Auswählen eines Schriftzeichens eines Bezugsvektors, der dem Abstand entspricht, als Schriftzeichenkandidat (Fig. 5).

**15.** Verfahren nach Anspruch 12, wobei, wenn ein Abstandswert unter Einschluss aller Merkmale des Merkmalsvektors berechnet wird, der die Schriftzeichenkandidatenauswahlschwelle nicht übersteigt, ein Schriftzeichen, das dem Bezugsvektor entspricht, der als Vergleichsobjekt verwendet wurde, als Schriftzeichenkandidat in einem Speicher gespeichert wird.

**16.** Verfahren nach Anspruch 15, das ferner einen Schritt des dynamischen Einstellens eines Abstandswertes von einem Schriftzeichenkandidaten mit einem m.-kleinsten Abstandswert als Schriftzeichenkandidatenauswahlschwelle umfasst, wobei m die Anzahl der auszuwählenden Schriftzeichenkarididaten ist.

**17.** Verfahren nach Anspruch 16, wobei, wenn die Abstandsberechnung des Merkmalsvektors hinsichtlich der Bezugsvektoren, die zu der Klasse mit der höchsten Schriftzeichenauftrittshäufigkeit gehören, beendet ist, wenn einer oder eine Mehrzahl dieser Abstände kleiner als eine für die Klasse ermittelte Schwelle sind, m Schriftzeichen entsprechend den Bezugsvektoren mit Abständen von dem kleinsten Abstand bis zu dem m.-kleinsten Abstand als Schriftzeichenkandidaten ausgewählt werden.

**18.** Verfahren nach einem der Ansprüche 12 bis 17, wobei ein Wörterbuch ähnlicher Schriftzeichen (17) zum Bereitstellen von Schriftzeichen mit ähnlichen Beziehungen zu willkürlichen Schriftzeichen verwendet wird und das Verfahren ferner die folgenden Schritte umfasst:

Heraussuchen (41) von Schriftzeichen, die ähnlich zu den jeweiligen Schriftzeichenkandidaten sind, aus dem Wörterbuch ähnlicher Schriftzeichen als Reaktion auf die Auswahl der Mehrzahl an Schriftzeichenkandidaten;
Berechnen von Abständen (42) zwischen dem zu erkennenden Merkmalsvektor und Bezugsvektoren der ähnlichen Schriftzeichen;

Ordnen von Abstandswerten (43) der Mehrzahl an Schriftzeichenkandidaten und Abstandswerten der ähnlichen Schriftzeichen und

Ausgeben (44) einer zuvor festgelegten Anzahl an Schriftzeichen in der Reihenfolge des zunehmenden Abstands als Erkennungsschriftzeichenkandidaten.

19. Computerprogramm-Produkt, umfassend Softwarecode zum Durchführen der Verfahrensschritte nach einem der Ansprüche 12 bis 18, wenn das Produkt auf einem Computer laufen gelassen wird.

20. Computerprogramm-Produkt nach Anspruch 19, das für den Computer verfügbare Daten umfasst, wobei die Daten ein Wörterbuch (15) umfassen, in dem alle Schriftzeichen auf Basis von Auftrittshäufigkeiten von Zielschriftzeichen in eine Mehrzahl an Klassen gruppiert sind und Bezugsvektoren für jede der Klassen gespeichert sind.

21. Computerprogramm-Produkt nach Anspruch 19 oder Anspruch 20, das für den Computer verfügbare Daten umfasst, wobei die Daten eine Liste (24) umfassen, die eine Reihenfolge des durchschnittlichen Abstands von Merkmalen einer Reihe von Bezugsvektoren angibt.

22. Computerprogramm-Produkt nach einem der Ansprüche 18 bis 21, das für den Computer verfügbare Daten umfasst, wobei die Daten ein Wörterbuch ähnlicher Schriftzeichen (17) zum Bereitstellen von Schriftzeichen mit ähnlichen Beziehungen zu willkürlichen Schriftzeichen umfasst.

## Revendications

1. Système de reconnaissance de caractères permettant de reconnaître des caractères en comparant les distances entre un vecteur d'éléments représentatifs extrait d'un modèle d'entrée et des vecteurs de référence de caractères ciblés enregistrés précédemment et déterminés par des modèles de formation des caractères ciblés, selon lequel tous les caractères sont classés en une pluralité de classes en fonction des fréquences d'occurrence des caractères ciblés, ledit système comprenant :

un ordinateur ;

un dispositif de stockage de dictionnaire (15) pour y enregistrer les vecteurs de référence pour chacune des classes; et

une liste (24) indiquant un ordre de distances moyennes calculées entre les éléments représentatifs de tous lesdits vecteurs de référence et les éléments représentatifs correspondants des vecteurs d'éléments représentatifs extraits de tous les modèles de formation de tous les caractères ciblés,

selon lequel le système est configuré de manière à pouvoir trier les éléments représentatifs du vecteur d'éléments représentatifs extraits du modèle d'entrée conformément à la liste en ordre descendant de distance moyenne ; et l'ordinateur est programmé de manière à pouvoir calculer les distances entre le vecteur d'éléments représentatifs et les vecteurs de référence d'une pluralité de caractères ciblés appartenant à la classe ayant la fréquence d'occurrence de caractères la plus élevée parmi la pluralité de classes, où :

i) un seuil de sélection de caractères candidats $T_h$ est calculé; et

ii) une comparaison est effectuée, dans laquelle

a) en ce qui concerne les éléments représentatifs jusqu'à un élément représentatif n-th, une distance cumulative entre les éléments représentatifs du vecteur d'éléments représentatifs et les éléments représentatifs correspondants des vecteurs de référence est calculée ;

b) la distance est comparée à $T_h$ ; et

c) si la distance n'est pas plus grande que $T_h$, donc a) et b) sont répétés pour les n éléments représentatifs suivants, mais si la distance est plus grande que $T_h$, la composition pour le vecteur de référence courant est arrêtée et une comparaison avec un vecteur de référence suivant est déclenchée ;

et

l'ordinateur est programmé de manière à sélectionner un caractère d'un vecteur de référence comme caractère candidat quand il y a une distance entre le vecteur d'éléments représentatifs et le vecteur de référence qui est plus faible qu'un seuil de classe prédéterminé pour la classe.

**2.** Système conformément à la revendication 1, selon lequel l'ordinateur est programmé de manière à calculer les distances entre le vecteur d'éléments représentatifs et les vecteurs de référence d'une pluralité de caractères ciblés appartenant à la classe ayant la deuxième fréquence d'occurrence de caractères la plus élevée quand il n'y a pas de distance plus faible que le seuil de la classe et à sélectionner un caractère d'un vecteur de référence correspondant à la distance en tant que caractère candidat quand il existe une distance plus faible qu'un second seuil de classe déterminé pour la classe.

**3.** Système conformément à la revendication 2, selon lequel l'ordinateur est programmé de telle sorte que, quand il n'y a pas de distance plus faible que le seuil de la classe pour la classe ayant la deuxième fréquence d'occurrence de caractères la plus élevée, les distances sont calculées entre le vecteur d'éléments représentatifs et les vecteurs de référence d'une pluralité de caractères appartenant à la classe ayant la troisième fréquence d'occurrence de caractères la plus élevée, et quand il existe une distance plus faible qu'un seuil de la classe déterminé pour la classe, un caractère d'un vecteur de référence correspondant à la distance est sélectionné comme caractère candidat.

**4.** Système conformément à la revendication 1, selon lequel l'ordinateur est programmé de manière à enregistrer un caractère correspondant à un vecteur de référence utilisé comme objet de comparaison, comme caractère candidat dans une mémoire, quand une valeur de distance basée sur tous les éléments représentatifs du vecteur d'éléments représentatifs ne dépasse pas le seuil de sélection de caractères candidats.

**5.** Système conformément à la revendication 4, selon lequel l'ordinateur est programmé de manière à fixer dynamiquement une valeur de distance d'un caractère candidat ayant la valeur de distance m-th la plus petite comme seuil de sélection de caractères candidats, m étant le nombre de caractères candidats à sélectionner.

**6.** Système conformément à la revendication 5, selon lequel l'ordinateur est programmé de telle sorte que quand les calculs de distance entre le vecteur d'éléments représentatifs et les vecteurs de référence appartenant à la classe ayant la fréquence d'occurrence de caractères la plus élevée sont terminés, et quand une ou plusieurs de ces distance sont plus faibles que le seuil de classe prédéterminé, les m caractères correspondant aux vecteurs de référence ayant des distances depuis la distance la plus faible jusqu'à la distance m-th la plus faible sont sélectionnés comme caractères candidats.

**7.** Système conformément à n'importe laquelle des revendications qui précèdent, comprenant également un dictionnaire de caractères similaires (17) qui permet de communiquer les caractères ayant des relations similaires avec des caractères arbitraires, selon lequel l'ordinateur est programmé de manière à pouvoir extraire les caractères similaires aux caractères candidats respectifs du dictionnaire de caractères similaires (17) en réponse à la sélection de la pluralité de caractères candidats, afin de calculer les distances entre le vecteur d'éléments représentatifs à reconnaître et les vecteurs de référence des caractères similaires, de trier les valeurs de distances de la pluralité de caractères candidats et les valeurs de distances des caractères similaires, et de sélectionner un nombre prédéterminé de caractères dans l'ordre ascendant de distances comme caractères candidats à la reconnaissance.

**8.** Système conformément à la revendication 1, selon lequel ledit dispositif de stockage de dictionnaire (15) peut être utilisé pour enregistrer les informations indiquant un ordre descendant de distances moyennes préparé en calculant les valeurs de distances moyennes des éléments représentatifs des vecteurs de référence des caractères ciblés d'essentiellement tous les caractères et tous les vecteurs de référence.

**9.** Système conformément à la revendication 8, selon lequel ledit ordinateur est programmé de manière à calculer ledit seuil de sélection de caractères candidats en calculant une distance entre ledit vecteur d'éléments représentatifs du caractère d'entrée et chaque vecteur d'une pluralité desdits vecteurs de référence, et de manière à fixer une valeur de distance qui est relativement faible par rapport auxdites valeurs de distances calculées comme seuil de sélection desdits caractères candidats.

**10.** Système conformément à la revendication 9, selon lequel ladite comparaison est effectuée de telle manière que ledit élément représentatif n-th corresponde à une dimension à mi-chemin prédéterminée.

**11.** Système conformément à la revendication 10, selon lequel quand la valeur de distance à la dimension à mi-chemin ne dépasse pas le seuil de sélection des caractères candidats, l'ordinateur calcule une valeur de distance jusqu'à une seconde dimension à mi-chemin.

**12.** Méthode de reconnaissance de caractères selon laquelle tous les caractères sont classés dans une pluralité de classes en fonction des fréquences d'occurrence des caractères ciblés, un ordinateur est muni d'un dispositif de stockage de dictionnaire (15) permettant d'enregistrer les vecteurs de référence des caractères ciblés pour chacune des classes et selon laquelle les vecteurs de référence sont déterminés à partir des modèles de formation des caractères ciblés, et une liste (24) indiquant un ordre de distances moyennes calculées entre les éléments représentatifs de tous lesdits vecteurs de référence et les éléments représentatifs correspondants des vecteurs d'éléments représentatifs extraits de tous les modèles de formation de tous les caractères ciblés est utilisée, dans laquelle les distances entre un vecteur d'éléments représentatifs extrait d'un modèle d'entrée et les vecteurs de référence sont comparées afin de réaliser une opération de reconnaissance de caractères, est utilisée, ladite méthode se composant des étapes suivantes:

tri (303) des éléments représentatifs du vecteur d'éléments représentatifs extraits du modèle d'entrée conformément à la liste (24) en ordre descendant de distances moyennes ;
calcul (304) des distances entre le vecteur d'éléments représentatifs et les vecteurs de référence d'une pluralité de caractères ciblés appartenant à la classe ayant la fréquence d'occurrence de caractères la plus élevée parmi la pluralité de classes, dans le cadre duquel

i) un seuil de sélection de caractères candidats $T_h$ est calculé (314) ; et
ii) une comparaison est effectuée, dans laquelle

a) en ce qui concerne les éléments représentatifs jusqu'à un élément représentatif n-th, une distance cumulative entre les éléments représentatifs du vecteur d'éléments représentatifs et les éléments représentatifs correspondants des vecteurs de référence est calculée (307);
b) la distance est comparée à $T_h$ (321); et
c) si la distance n'est pas plus grande que $T_h$, donc a) et b) sont répétés pour les n éléments représentatifs suivants, mais si la distance est plus grande que $T_h$, la composition pour le vecteur de référence courant est arrêtée et une comparaison avec un vecteur de référence suivant est déclenchée;

et
sélection d'un caractère d'un vecteur de référence comme caractère candidat quand il y a une distance entre le vecteur d'éléments représentatifs et le vecteur de référence qui est plus faible qu'un seuil de classe prédéterminé pour la classe (318).

**13.** Méthode conformément à la revendication 12, comprenant également les étapes suivantes :

calcul, quand il n'existe pas de distance plus faible que le seuil de la classe, des distances entre le vecteur d'éléments représentatifs et les vecteurs de référence d'une pluralité de caractères ciblés appartenant à la classe ayant la deuxième fréquence d'occurrence de caractères la plus élevée ; et
sélection, quand il existe une distance plus faible qu'un deuxième seuil de classe déterminé pour la classe, d'un caractère d'un vecteur de référence correspondant à la distance comme caractère candidat (Fig. 4).

**14.** Méthode conformément à la revendication 13, comprenant également les étapes suivantes :

calcul des distances entre le vecteur d'éléments représentatifs et les vecteurs de référence de la pluralité de caractères appartenant à la classe ayant la troisième fréquence d'occurrence de caractères la plus élevée quand il n'existe pas de distance plus faible que le seuil de la classe pour la classe ayant la deuxième fréquence d'occurrence de caractères la plus élevée ; et
quand il existe une distance plus faible qu'un seuil de classe déterminé pour la classe, sélection d'un caractère d'un vecteur de référence correspondant à la distance comme caractère candidat (Fig. 5).

**15.** Méthode conformément à la revendication 12, quand une distance est calculée en incluant tous les éléments représentatifs du vecteur d'éléments représentatifs, ladite distance ne dépassant pas le seuil de sélection de caractères candidats, un caractère correspondant au vecteur de référence qui a été utilisé comme objet de comparaison est enregistré comme caractère candidat en mémoire.

**16.** Méthode conformément à la revendication 15, comprenant également une étape consistant à fixer dynamiquement une valeur de distance pour un caractère candidat ayant la valeur de distance m-th la plus faible comme seuil de sélection de caractères candidats, m étant le nombre de caractères candidats à sélectionner.

**17.** Méthode conformément à la revendication 16, selon laquelle quand un calcul de la distance du vecteur d'éléments représentatifs par rapport aux vecteurs de référence appartenant à la classe ayant la fréquence d'occurrence de caractères la plus élevée est achevé, quand une ou une pluralité de ces distances sont plus faibles qu'un seuil déterminé pour la classe, les m caractères correspondant aux vecteurs de référence ayant des distances comprises entre la distance la plus faible et la distance m-th la plus faible sont sélectionnés comme caractères candidats.

**18.** Méthode conformément à l'une quelconque des revendications 12 à 17, selon laquelle un dictionnaire de caractères similaires (17) permettant de fournir des caractères ayant des relations similaires avec des caractères arbitraires est utilisé, la méthode comprenant également les étapes suivantes :

extraction (41) des caractères similaires aux caractères candidats respectifs du dictionnaire de caractères similaires en réponse à la sélection de la pluralité de caractères candidats ;
calcul des distances (42) entre le vecteur d'éléments représentatifs à reconnaître et les vecteurs de référence des caractères similaires ;
tri des valeurs de distances (43) de la pluralité des caractères candidats et des valeurs de distances des caractères similaires ; et
sortie (44) d'un nombre prédéterminé de caractères en ordre ascendant de distance comme caractères candidats à la reconnaissance.

**19.** Un produit consistant en un programme informatique comprenant un code logiciel permettant d'effectuer les diverses actions d'application de la méthode conformément à l'une quelconque des revendications 12 à 18, lorsque ledit produit est exécuté sur un ordinateur.

**20.** Le produit consistant en un programme informatique de la revendication 19, incluant des données accessibles par ordinateur, les données comprenant un dictionnaire (15) dans lequel tous les caractères sont classés dans une pluralité de classes en fonction des fréquences d'occurrence des caractères ciblés, et les vecteurs de référence sont enregistrés pour chacune des classes.

**21.** Le produit consistant en un programme informatique de la revendication 19 ou de la revendication 20, incluant des données accessibles par l'ordinateur, les données comprenant une liste (24) indiquant un ordre de distances moyennes des éléments représentatifs d'un certain nombre de vecteurs de référence.

**22.** Le produit consistant en un programme informatique de l'une quelconque des revendications 18 à 21, incluant des données accessibles par l'ordinateur, les données comprenant un dictionnaire de caractères similaires (17) permettant de fournir des caractères ayant des relations similaires avec des caractères arbitraires.

*FIG. 1*

INPUT DATA → CHARACTER SEGMENTATION (11) → FEATURE EXTRACTION (12) → FEATURE SORTING (13) → CHARACTER CANDIDATE SELECTION (14) → PROCESSING FOR SIMILAR CHARACTERS (16) → OUTPUT CHARACTER CANDIDATES

REFERENCE VECTORS FOR CLASS 1 | REFERENCE VECTORS FOR CLASS 2 | REFERENCE VECTORS FOR CLASS 3 (15)

SIMILAR CHARACTER DICTIONARY (17)

FIG. 2

# FIG. 3

```
         ( CLASS 1 )
              │
    ┌─────────────────┐
    │   INPUT DATA    │──── 301
    └─────────────────┘
              │
    ┌─────────────────────────┐
    │ CHARACTER SEGMENTATION,  │──── 302
    │    FEATURE EXTRACTION    │
    └─────────────────────────┘
              │
    ┌──────────────────────────────────┐
    │ FEATURE SORTING BASED ON LIST 24 OF │──── 303
    │ FEATURE ELEMENTS BASED ON VARIANCE │
    └──────────────────────────────────┘
              │
    ┌────────────────────────────────┐
    │ CALCULATION OF DISTANCE VALUES AS │──── 304
    │  TO FIRST 10 REFERENCE VECTORS   │
    └────────────────────────────────┘
              │
    ┌──────────────────────────────────┐
    │ Th ── MAXIMUM DISTANCE VALUE      │──── 314
    │ AMONG THE 10 DISTANCE VALUES      │
    └──────────────────────────────────┘
              │
    ┌──────────────────────────┐
    │ i ── 11, k ── 0, m ── 0  │──── 305
    └──────────────────────────┘
              │
    ┌──────────────────────────┐
    │ m ── m+1, j ── m+50*k    │──── 306
    └──────────────────────────┘
              │
    NO    ◇ m=50? ◇
              │ YES
    ┌──────────────────────────┐
    │ DISTANCE VALUE Dj AS TO   │──── 307
    │  i-th REFERENCE VECTOR    │
    └──────────────────────────┘
              │
    NO ◇ j=200? ◇  NO  ◇ Dj>Th? ◇ YES
         309  321          310
    k ── k+1, m ── 0
    ┌───────────────────────────────────┐
    │ STORED, AND 10 CHARACTER CANDIDATES ARE │
    │ SELECTED IN ASCENDING ORDER OF DISTANCE │
    └───────────────────────────────────┘
              │
    ┌──────────────────────────┐
    │ Th ── MAXIMUM DISTANCE VALUE │──── 311
    │ AMONG 10 NEW CANDIDATES   │
    └──────────────────────────┘
              │
    313  i ── i+1
    312  ◇ i=382? ◇ NO
              │ YES
    319              318          320
    ┌──────────────────────┐  YES ◇ D best< Thstage 1? ◇ NO ┌─────────────┐
    │ 10 CANDIDATES ARE SENT TO │                            │ TO CLASS 2  │
    │ SIMILAR CHARACTER PROCESSING │                          └─────────────┘
    └──────────────────────┘
```

# FIG. 4

CLASS 2

502
$i \leftarrow 1, k \leftarrow 0, m \leftarrow 0$

503
$m \leftarrow m+1, \ j \leftarrow m+50*k$

m=50?  NO

YES

504
DISTANCE VALUE $D_j$ AS TO i-th REFERENCE VECTOR

511
$i \leftarrow i+1$

506
$k \leftarrow k+1, m \leftarrow 0$

505
j=200?  NO    NO    $D_j$>Th?    YES

YES                          515

508
CHARACTER CODE IS STORED IN A MEMORY, AND 10 CHARACTER CANDIDATES ARE SELECTED IN ASCENDING ORDER OF DISTANCE

509
Th ← MAXIMUM DISTANCE VALUE AMONG 10 NEW CANDIDATES

510
i=1126?  NO

YES

512
513
10 CANDIDATES ARE SENT TO SIMILAR CHARACTER PROCESSING

YES    D best< Th stage 2?    NO

514
TO CLASS 3

22

# FIG. 5

```
                          ( CLASS 3 )
                              |
                              |        ┌─602
                    ┌─────────────────────┐
                    │  i ← 1,k ← 0,m ← 0  │
                    └─────────────────────┘
                              |
                              |                 ┌─603
                    ┌─────────────────────┐
                    │ m ← m+1, j ← m+50*k │
                    └─────────────────────┘
                              |
         NO              ╱─────────╲
      ┌────────────────<   m=50?    >
      │                  ╲─────────╱
      │                     | YES          ┌─604
      │            ┌──────────────────────────┐
  ┌─606           │  DISTANCE VALUE Dⱼ AS TO  │
  │  ┌──────────┐  │    i-th REFERENCE VECTOR   │
  │  │ k ← k+1,m← 0│ └──────────────────────────┘
  │  └──────────┘              |
  │        │                   |
  │     ┌─605                   |
  │  NO  ╱──────╲      NO    ╱─────────╲   YES
  └────< j=200?  >◄────────<   Dⱼ>Th?   >─────┐
        ╲──────╱            ╲─────────╱       │
           | YES                 └─614        │
           |       ┌─608                      │
           |   ┌──────────────────────────────────────┐
           └──►│ CHARACTER CODE IS STORED IN A MEMORY, │
               │ AND 10 CHARACTER CANDIDATES ARE SELECTED│
               │   IN ASCENDING ORDER OF DISTANCE       │
               └──────────────────────────────────────┘
                              |
               ┌──────────────────────────────┐
        609────│  Th ← MAXIMUM DISTANCE VALUE  │
               │    AMONG 10 NEW CANDIDATES    │
               └──────────────────────────────┘
                              |
            ┌─610              |
             ╲─────────╲       |
            <   i=1459?   >────┘
             ╱─────────╱   NO
                  | YES
          613──   |
      ┌───────────────────────────────┐
      │  10 CANDIDATES ARE SENT TO     │
      │ SIMILAR CHARACTER PROCESSING   │
      └───────────────────────────────┘
```

```
      ( SIMILAR CHARACTER PROCESSING )
                     │
                     ▼
  ┌────────────────────────────────────┐  ╭─41
  │    SIMILAR CHARACTERS ARE TAKEN OUT FROM  │
  │    A SIMILAR CHARACTER DICTIONARY WITH    │
  │    RESPECT TO EACH OF 10 CANDIDATES       │
  └────────────────────────────────────┘
                     │
                     ▼
  ┌────────────────────────────────────┐  ╭─42
  │  CALCULATION OF DISTANCES BETWEEN A FEATURE │
  │  VECTOR AND RESPECTIVE SIMILAR CHARACTER VECTORS │
  └────────────────────────────────────┘
                     │
                     ▼
  ┌────────────────────────────────────┐  ╭─43
  │     DISTANCE VALUES OF THE 10 CANDIDATES     │
  │     AND THE SIMILAR CHARACTERS ARE SORTED,   │
  │  10 CANDIDATES ARE SELECTED IN ASCENDING ORDER │
  │  OF DISTANCE, AND THEY ARE MADE FINAL CANDIDATES │
  └────────────────────────────────────┘
                     │
                     ▼
  ┌────────────────────────────────────┐  ╭─44
  │ A CHARACTER HAVING THE SMALLEST DISTANCE VALUE AMONG │
  │   THE 10 FINAL CANDIDATES IS OUTPUTTED AS A   │
  │    RECOGNIZED CHARACTER, AND THE REMAINING 9  │
  │ CHARACTERS ARE OUTPUTTED AS SUBSTITUTE CANDIDATES │
  └────────────────────────────────────┘
                     │
                     ▼
         ┌──────────────────────┐  ╭─45
         │  TO POST PROCESSING 16 │
         └──────────────────────┘
```

FIG. 6